# EUROPEAN PATENT SPECIFICATION

(11) **EP 3 368 836 B1**
(45) Date of publication and mention of the grant of the patent: **11.09.2019**
(21) Application number: 16809209.6
(22) Date of filing: 13.10.2016
(51) Int. Cl.: F25B 9/04, F24F 3/14, B60H 1/32, B60H 3/02, B01D 53/14

(54) **A CABIN COOLING SYSTEM**
KABINENKÜHLSYSTEM
SYSTÈME DE REFROIDISSEMENT DE CABINE

(30) Priority: 26.10.2015 TR 201513320
(43) Date of publication of application: 05.09.2018
(73) Proprietor: Tofas Turk Otomobil Fabrikasi Anonim Sirketi, Bursa (TR)
(72) Inventor: AYARTURK, Hasan, 16369 Bursa (TR)
(74) Representative: Dericioglu Kurt, Ekin
(86) International application number: PCT/TR2016/050379
(87) International publication number: WO 2017/074282

(56) References cited:
- WO-A1-2015/094138
- JP-U- H0 454 712
- US-A- 5 205 126
- US-A1- 2009 241 555

## Description

### Field of the Invention

The present invention generally relates to vehicle air conditioning systems. The invention relates to a cabin cooling system which does not require an additional cooling system to bring the dried air in the air conditioning system to ambient temperature, and which has a desiccant and vortex tube, and provides a simple and inexpensive use.

### Background of the Invention

Nowadays in air conditioning systems, liquid/solid desiccant systems are used in order to dry the air received into the system, and the temperature of the dried air is lowered to ambient temperature and humidified and then delivered into the cabin. During the air drying process taking place during this process flow, as the temperature of the dried air rises due to the condensation of the water therein, a second passive cooling system (fan and serpentine) is required in order to bring it to a temperature near the ambient temperature.

The electric motor used for the second passive cooling system fan, and the installation, control unit and the other related parts connected thereto are expensive and complicated. In addition, ambient temperature values cannot be attained by means of the additional passive cooling system. Sizes of the passive cooling systems used for decreasing the ambient temperature are large and they increase the weight of the vehicle. Fuel consumption of a vehicle with increased weight also increases proportionally.

In the air conditioning systems at present, for demisting by dehumidifying the air without exceeding the comfort temperature, air is first cooled by the air conditioning system, the humidity therein is condensed, and then it is heated thereby relative humidity rate is decreased at a lower temperature. More than half of the energy that is consumed for cooling is used for condensation of the latent heat, in other words the humidity in the air. Energy consumption is high in these systems as air conditioning system is running, and it increases sizes, weight and accordingly cost of the HVAC assembly and installation.

In the state of the art, in cooling systems with solid or liquid desiccants, the energy used for regeneration heat, particularly in electric vehicles whose waste heat source is insufficient, is high. Use of energy generation equipment (e.g. electrical heater) is required and these systems are expensive and complicated. Vehicle range is shortened particularly in electrical vehicles since the amount of energy consumed for defroster and heating is high. Waste heat cannot be used within the system.

Several problems are encountered concerning the coolants particularly in cooling systems with liquid desiccants. Most of the coolants are expensive and harmful for the environment. The new legal regulations have brought the obligation to develop coolants which are less harmful for the environment; therefore costs of the coolants have increased.

In the system disclosed in Chinese patent document no. CN103743005, an application in the state of the art, the heat of the vortex tube output cold and hot air is transferred to the desiccant via the closed heat exchangers and the heat exchanger outputs are discharged to the environment. In the cooling system of the said invention, the vortex tube output cold and hot air are directly passed through the desiccant and carries out heat transfer via direct contact, and the pressurized air leaving the desiccant both enables the in-cabin air circulation (being appropriate for closed loop inner pressure) and provides the fan power required for passive desiccant cooling by means of the air amplifiers. This way, the waste pressure and heats can be used for ventilation and furthermore two fans, engines and control systems, etc. can be cancelled.

United States patent document no. US4333017, an application known in the state of the art, discloses a system and a method for closed loop vortex operations. Two vortex tubes are used in the said system. Hot outlets of the said tubes form one loop and the cold outlets thereof form another loop. These loops then are combined at an intersection point. In the said system, the vortex tube cooling load is used alone, and since it is not used together with a desiccant, the cooling effect coefficient is lowered and thus energy consumption is higher.

United States patent document no. US20140223947A1, an application known in the state of the art, discloses a temperature and humidity control device. It is stated that a liquid desiccant is used in the said system for dehumidifying the air and furthermore it is stated that LiCl can be preferred as the liquid desiccant solution. The air required for the operation of the liquid desiccant is cooled at the evaporator and a second liquid desiccant is introduced. In the said system, LiCl which is an expensive coolant that is harmful for the environment is used. Moreover, use of a secondary air conditioning system is required in the said system.

Other examples are discloses in US2009/0241555, US5205126, WO2015/0941138 and JPH0454712U.

In our invention, the vortex tube and the desiccant are used together and thus the cooling coefficient is increased, an additional cooling fan is not required and waste heats can be utilized. Furthermore, in our invention the system is enabled to operate by means of inexpensive coolants such as LiCl or CaCl2, which are environmentally friendly and which clean the air from bacteria, instead of the coolants which are expensive and harmful for the environment.

### Summary of the Invention

The objective of the present invention is to provide an efficient cabin cooling system according to claim 1 with low energy consumption by use of vortex tube and desiccant together in the air conditioning system. In the system described in the invention, since air is dried before the air is cooled, it does not require consumption of excessive power.

Another objective of the present invention is to provide a cabin cooling system which has low energy consumption, system weight and size, and which does not require any additional cooling member, fan or air conditioning system. The system of the present invention performs cooling by means of its evaporative cooling feature.

A further objective of the present invention is to provide a cabin cooling system which, by using the heat of the hot air leaving the hot part of the vortex tube for regeneration, enables the waste heat to be used within the system, and thereby eliminating additional energy consumption and cost. In the system described in the invention, the air output from the vortex tube is directly delivered into the liquid solution and it is expected to discharge heat to the solution in order to be regenerated and to draw heat from the solution in order to perform pre-cooling; the air leaving the solution is connected to two air amplifiers, and this way, it can be worked in system closed pressure by making use of the resistance of the air amplifier. The primary air amplifier is used for circulation of the air supplied to the environment and the secondary air amplifier is used for intake (suction) of the air passing over the serpentine, where the solution is cooled passively. This way, while ventilation can be provided by means of the vortex tube output by using waste pressures without using an extra fan, the air speed and the air intake power at the walls of the air amplifier can be increased by utilizing the waste heats. Another objective of the present invention is to provide a cabin cooling system which, thanks to being simple and energy-saving without requiring any additional fan and air conditioner, aims to prevent the problem of short range particularly encountered in electric vehicles

### Detailed Description of the Invention

"A cabin cooling system" developed to fulfill the objective of the present invention is illustrated in the accompanying figures, in which:

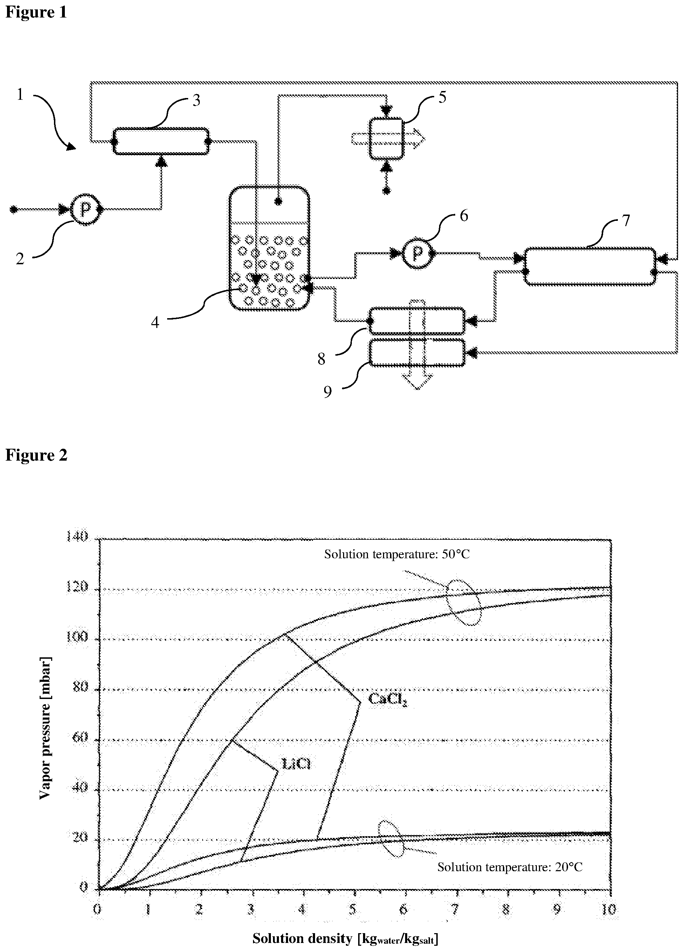

Figure 1 is a view of the cabin cooling system of the present invention.
Figure 2 is the graphic of the change in the partial vapor pressures of liquid desiccants by temperature.

The components shown in the figures are each given reference numbers as follows:
- 1.: Cabin cooling system
- 2.: Air pump
- 3.: Vortex tube
- 4.: Desiccant
- 5.: Primary air amplifier
- 6.: Circulation pump
- 7.: Regeneration vessel
- 8.: Serpentine
- 9.: Secondary air amplifier

A cabin cooling system (1), which eliminates the internal circulation and external circulation fans in air conditioning systems, uses vortex tube hot part for regeneration and the cold part for cooling the cabin air, and is operated in a closed system, basically comprises
- at least one air pump (2), which enables the input air that is comprised of the ambient air, outer air or a mixture thereof at certain ratios to be brought to a predetermined pressure value,
- at least one vortex tube (3) to which the air leaving the air pump (2) is transmitted, and wherein the air leaving through its cold outlet is used for cabin air circulation and the air leaving through its hot outlet is used for regeneration,
- at least one liquid desiccant (4) which enables the water vapor in the air to be condensed due to the partial vapor pressure difference by injecting liquid into the cold air leaving the vortex tube (3),
- at least one primary air amplifier (5), in which the dry air, whose water vapor is condensed, leaving the desiccant (4) is combined with the cabin air and cooled to a predetermined temperature value and delivered into the cabin,
- at least one circulation pump (6) which enables to draw the liquid desiccant (4), whose concentration has decreased with the water vapor condensed in the air, from the vessel it is located,
- at least one regeneration vessel (7) wherein the liquid desiccant (4) with low concentration drawn by the circulation pump (6) is regenerated by the hot air leaving through the hot outlet of the vortex tube (3),
- at least one serpentine (8) wherein the hot liquid desiccant (4) leaving the regeneration vessel (7) is dried with outer environment air,
- at least one secondary air amplifier (9) which works with the hot air leaving the regeneration vessel (7) and which enables to cool the hot liquid desiccant (4) by drawing the outer environment air into the system and passing it over the serpentine (8).

The cabin cooling system (1) of the present invention is a closed cooling system which enables the cabin temperature to reach the desired values by using the vortex tube (3) and the liquid desiccant (4) together. In the said system, the vortex tube (3) is not used alone. Before the air is cooled, it is dried by the liquid desiccant (4) and thus the energy consumed for cooling the air is saved.

In the cooling system (1) of the present invention, the input air that is comprised of the ambient air, outer air or a mixture thereof at certain ratios is pressurized by the air pump (2) to a predetermined pressure value, and the pressurized air is delivered to the vortex tube (3). In a preferred embodiment of the invention, a compressor is used as the air pump (2).

The vortex tube (3) has two outlets. One of these is used for hot air output and the other for cold air output. The air entering into the vortex tube (3) is brought to different temperature values and separated from each other, and they are delivered back into the system through different outlets (hot air outlet, cold air outlet). The cold air leaving the vortex tube is delivered to the liquid desiccant (4) vessel and the hot air to the regeneration vessel (7).

The cold air leaving through the cold outlet of the vortex tube (3) is directly delivered into the vessel containing the liquid desiccant (4), and the said cold air is dried at a fixed temperature by the liquid desiccant (4). Temperature of the air which is dried by condensation of the water therein does not rise due to the condensation heat of the water, and thus extra energy and time or additional cooling members to cool the air are not required in the system (1) of the present invention.

In the cabin cooling system (1) described in the invention, the cold air leaving the vortex tube (3) is directly delivered into the liquid desiccant (4) and it is expected to give heat to the liquid desiccant (4) by direct contact for regeneration thereof and to draw heat from the liquid desiccant (4) for performing pre-cooling.

In the cabin cooling system (1) of the present invention, liquid desiccant (4) is used in the drying process in order to remove the water vapor in the air before it is cooled. When solid desiccant is used, it requires an additional drive member; and this causes the system to be complicated and heavy, and increases energy consumption. In our system; air outputs of the vortex tube (3), waste pressure and heat values are used efficiently in the system by using liquid desiccant (4), and they eliminate the requirement for additional systems or members.

In a preferred embodiment of the invention; inexpensive coolants such as LiCl or CaCl2, which are environmentally friendly and which clean the air from bacteria, are used as the liquid desiccant (4) instead of the coolants which are expensive and harmful for the environment.

The air whose water vapor is removed by means of the liquid desiccant (4) is delivered to the primary air amplifier (5) and the secondary air amplifier (9) through the different outlets of the vessel containing the liquid desiccant (4), and thus the system is allowed to operate in closed pressure by utilizing the resistance of the said air amplifiers (5, 9).

The air whose water vapor is removed by means of the liquid desiccant (4) is delivered to the primary air amplifier (5). In this step, cooling water is also delivered to the primary air amplifier (5) for evaporative cooling. The primary air amplifier (5) draws the cabin air; and the said cabin air is combined with the dry air leaving the liquid desiccant (4) and is cooled to the desired temperature values by means of evaporative cooling. The air which is drawn from the cabin and combined with the dry air and cooled is delivered back into the cabin by means of the primary air amplifier (5).

Concentration of the liquid desiccant (4) is decreased by the water vapor removed from the dehumidified air. The liquid desiccant (4), whose concentration is decreased, is drawn from its environment by means of the circulation pump (6) and delivered to the regeneration vessel (7), and it is regenerated by the hot air leaving the vortex tube (3). The liquid desiccant (4) which is regenerated with the hot air from the vortex tube (3) gets heated. The heated liquid desiccant (4) is delivered to the serpentine. Here, the hot liquid desiccant (4) is dried by the cold air drawn from the outer environment by the secondary air amplifier (9), which is driven by the hot air leaving the regeneration vessel (7). The secondary air amplifier (9) passes the outer environment cold air over the serpentine (8) and thus the liquid desiccant (4) is passively cooled. In the cabin cooling system (1) of the present invention, the inner circulation and outer circulation fans are eliminated upon using the waste pressure and hot air; and the hot part of the vortex tube (3) is used for regeneration and the cold part thereof is used for cooling the cabin air.

In the preferred embodiment of the invention, the primary air amplifier (5) is used for circulation of the air that is delivered into the system (1) and the secondary air amplifier (9) is used in the process of regeneration of the liquid desiccant (4). The function of the secondary air amplifier is to draw the cold air from the outer environment into the system (1) and pass it over the serpentine (8), and to enable the liquid desiccant (4) to be passively cooled by the said cold air. This way, the waste pressures are used to provide ventilation by means of the cold air output of the vortex tube (3) without using a fan; and also, the air speed and air intake power at the walls of the air amplifier (5, 9) can be increased by utilizing the waste heats.

The cabin cooling system (1) of the present invention eliminates the need for a fan in the system by delivering the pressurized air leaving the liquid desiccant (4) vessel to the primary air amplifier (5) and secondary air amplifier (9); and the inner air circulation is carried out by means of waste pressure and heat. The liquid desiccant (4) is passively cooled by the cold air passed over the serpentine (8) and this cold air flow is provided by using the waste pressure and heat. In brief, the air flow and the cooling processes in the system (1) are provided by using waste pressure and heat, and thus use of additional cooling systems or fans are not required and energy consumption is economized.

## Claims

1. A cabin cooling system (1), which eliminates the internal circulation and external circulation fans in air conditioning systems by using waste pressure and hot air, and which is operated in a closed system, comprising:
- at least one air pump (2), which enables the input air that is comprised of the ambient air, outer air or a mixture thereof at certain ratios to be brought to a predetermined pressure value,
- at least one vortex tube having a cold outlet and a hot outlet, wherein the air leaving through said cold outlet is used for cabin air circulation and the air leaving through said hot outlet is used for regeneration,
**characterised by**,
- at least one vessel containing liquid desiccant (4) which enables the cold air leaving the vortex tube (3) to be dried at a fixed temperature,
- at least one primary air amplifier (5), in which the dry air, which is dried by removal of the water vapor therein by means of the liquid desiccant (4), is combined with the in-vehicle cabin air and cooled to a predetermined temperature value,
- at least one circulation pump (6) which enables to draw the liquid desiccant (4), whose concentration has decreased with the water vapor condensed in the air, from said vessel
- at least one regeneration vessel (7) wherein the liquid desiccant (4) with low concentration drawn by the circulation pump (6) is regenerated by the hot air leaving through said hot outlet of the vortex tube (3),
- at least one serpentine (8) wherein the hot liquid desiccant (4) leaving the regeneration vessel (7) is dried with outer environment air,
- at least one secondary air amplifier (9) which works with the hot air leaving the regeneration vessel (7) and which enables to cool the hot liquid desiccant (4) by drawing the outer environment air into the system and passing it over the serpentine (8).

2. A cabin cooling system (1) according to Claim 1, **characterized in that** the vortex tube (3) and the liquid desiccant (4) are used together and that the air is dried by the liquid desiccant (4) before being cooled.

3. A cabin cooling system (1) according to Claim 1, **characterized by** the vortex tube (3), wherein the incoming air is brought to different temperature values and separated from each other, and delivered back into the system through said different hot outlet and cold outlet.

4. A cabin cooling system (1) according to Claim 1, **characterized in that** LiCl and/or CaCl2 is/are used as the liquid desiccant (4).

5. A cabin cooling system (1) according to Claim 1, **characterized in that** said vessel containing the liquid desiccant (4) has two different outlets, and the air whose water vapor is removed by means of the liquid desiccant (4) is delivered to the primary air amplifier (5) through one of the said outlets and to the secondary air amplifier (9) through the other outlet.

6. A cabin cooling system (1) according to Claim 1, **characterized in that** the primary air amplifier (5) enables the air, which is obtained by combining the in-vehicle cabin air with the dried air and then cooling, to be delivered back into the cabin.

7. A cabin cooling system (1) according to Claim 1, **characterized by** the primary air amplifier (5) wherein the air drawn from within the cabin is cooled by evaporative cooling method.

8. A cabin cooling system (1) according to Claim 1, **characterized in that** the primary air amplifier (5) is used for air circulation and the secondary air amplifier (9) is used for regeneration of the liquid desiccant (4).

## Patentansprüche

1. Kabinenkühlsystem (1), das die internen Zirkulations- und externen Zirkulationslüfter in Klimasystemen unter Verwendung von Abfalldruck und Heißluft eliminiert und das in einem geschlossenen System betrieben wird, umfassend:
- mindestens eine Luftpumpe (2), die es ermöglicht, die aus der Umgebungsluft, der Außenluft oder einem Gemisch derselben in bestimmten Verhältnissen bestehende Zuluft auf einen vorgegebenen Druckwert zu bringen,
- mindestens ein Vortexrohr mit einem Kaltauslass und einem Heißauslass, wobei die durch den Kaltauslass austretende Luft zur Kabinenluftzirkulation verwendet wird und die durch den Heißauslass austretende Luft zur Regeneration verwendet wird, **gekennzeichnet durch**,
- mindestens einen Behälter, der flüssiges Trockenmittel (4) enthält, das es ermöglicht, die aus dem Vortexrohr (3) austretende Kaltluft bei einer festgelegten Temperatur zu trocknen,
- mindestens einen primären Luftverstärker (5), bei dem die trockene Luft, die durch Entfernen des darin enthaltenen Wasserdampfes mittels des flüssigen Trockenmittels (4) getrocknet wird, mit der Fahrzeuginnenraumluft kombiniert und auf einen vorgegebenen Temperaturwert gekühlt wird,
- mindestens eine Umwälzpumpe (6), die es ermöglicht, das flüssige Trockenmittel (4), dessen Konzentration mit dem in der Luft kondensierten Wasserdampf abgenommen hat, aus dem Behälter zu entnehmen,
- mindestens ein Regenerierungsbehälter (7), wobei das von der Umwälzpumpe (6) angesaugte flüssige Trockenmittel (4) mit niedriger Konzentration durch die heiße Luft regeneriert wird, die durch den heißen Ausgang des Vortexrohres (3) austritt,
- mindestens eine Serpentine (8), wobei das heiße flüssige Trockenmittel (4), das das Regenerierungsbehälter (7) verlässt, mit äußerer Umgebungsluft getrocknet wird,
- mindestens einen sekundären Luftverstärker (9), der mit der aus dem Regenerierungsbehälter (7) austretenden Heißluft arbeitet und der es ermöglicht, das heiße flüssige Trockenmittel (4) zu kühlen, indem er die äußere Umgebungsluft in das System zieht und über die Serpentine (8) leitet.

2. Kabinenkühlsystem (1) nach Anspruch 1, **dadurch gekennzeichnet, dass** das Vortexrohr (3) und das flüssige Trockenmittel (4) gemeinsam verwendet werden und dass die Luft vor dem Kühlen durch das flüssige Trockenmittel (4) getrocknet wird..

3. Kabinenkühlsystem (1) nach Anspruch 1, **gekennzeichnet durch** das Vortexrohr (3), wobei die ankommende Luft auf unterschiedliche Temperaturwerte gebracht und voneinander getrennt und über den unterschiedlichen Heißauslass und Kaltauslass wieder in das System geleitet wird.

4. Kabinenkühlsystem (1) nach Anspruch 1, **dadurch gekennzeichnet, dass** LiCl und/oder CaCl2 als flüssiges Trockenmittel (4) verwendet wird/sind.

5. Kabinenkühlsystem (1) nach Anspruch 1, **dadurch gekennzeichnet, dass** der Behälter, der das flüssige Trockenmittel (4) enthält, zwei verschiedene Auslässe aufweist und die Luft, deren Wasserdampf mittels des flüssigen Trockenmittels (4) entfernt wird, über einen der Auslässe dem primären Luftverstärker (5) und über den anderen Auslass dem sekundären Luftverstärker (9) zugeführt wird.

6. Kabinenkühlsystem (1) nach Anspruch 1, **dadurch gekennzeichnet, dass** der primäre Luftverstärker (5) es ermöglicht, die Luft, die durch Kombinieren der Kabinenluft im Fahrzeug mit der getrockneten Luft und anschließendes Kühlen erhalten wird, wieder in die Kabine zu fördern.

7. Kabinenkühlsystem (1) nach Anspruch 1, **gekennzeichnet durch** den primären Luftverstärker (5), wobei die aus der Kabine angesaugte Luft durch ein Verdunstungskühlverfahren gekühlt wird.

8. Kabinenkühlsystem (1) nach Anspruch 1, **dadurch gekennzeichnet, dass** der primäre Luftverstärker (5) zur Luftzirkulation und der sekundäre Luftverstärker (9) zur Regeneration des flüssigen Trockenmittels (4) verwendet wird.

## Revendications

1. Système de refroidissement de cabine (1), qui élimine les ventilateurs de circulation interne et externe dans les systèmes de climatisation en utilisant la pression résiduelle et l'air chaud, et qui est exploité dans un système fermé, comprenant:
- au moins une pompe à air (2), qui permet d'amener l'air d'entrée constitué de l'air ambiant, de l'air extérieur ou d'un mélange de ceux-ci à une valeur de pression prédéterminée dans certains rapports,
- au moins un tube vortex ayant une sortie froide et une sortie chaude, dans lequel l'air sortant par ladite sortie froide est utilisé pour la circulation d'air de la cabine et l'air sortant par ladite sortie chaude est utilisé pour la régénération, **caractérisé par**,
- au moins un récipient contenant un liquide déshydratant (4) qui permet de sécher l'air froid sortant du tube vortex (3) à une température fixe,
- au moins un amplificateur d'air primaire (5), dans lequel l'air sec, qui est séché par élimination de la vapeur d'eau qu'il contient au moyen du liquide déshydratant (4), est combiné avec l'air de la cabine du véhicule et refroidi à une valeur de température prédéterminée,
- au moins une pompe de circulation (6) qui permet d'aspirer le liquide déshydratant (4), dont la concentration a diminué avec la vapeur d'eau condensée dans l'air, dudit récipient
- au moins un récipient de régénération (7) dans lequel le liquide déshydratant (4) à faible concentration aspiré par la pompe de circulation (6) est régénéré par l'air chaud sortant par ladite sortie chaude du tube vortex (3),
- au moins un serpentin (8) dans lequel le liquide déshydratant chaud (4) sortant du récipient de régénération (7) est séché à l'air extérieur,
- au moins un amplificateur d'air secondaire (9) qui fonctionne avec l'air chaud sortant du récipient de régénération (7) et qui permet de refroidir le liquide déshydratant chaud (4) en aspirant l'air extérieur dans le système et en le faisant passer sur la serpentin (8).

2. Système de refroidissement de cabine (1) selon la revendication 1, **caractérisé en ce que** le tube vortex (3) et le liquide déshydratant (4) sont utilisés ensemble et que l'air est séché par le liquide déshydratant (4) avant d'être refroidi.

3. Système de refroidissement de cabine (1) selon la revendication 1, **caractérisé par** le tube vortex (3), dans lequel l'air entrant est amené à des valeurs de température différentes et séparé les uns des autres, et livré de nouveau dans le système via lesdites différentes sorties chaudes et froides.

4. Système de refroidissement de cabine (1) selon la revendication 1, **caractérisé en ce que** LiCl et/ou CaCl2 est/sont utilisé(s) comme liquide déshydratant (4).

5. Système de refroidissement de cabine (1) selon la revendication 1, **caractérisé en ce que** ledit récipient contenant le liquide déshydratant (4) a deux sorties différentes, et l'air dont la vapeur d'eau est éliminée au moyen du liquide déshydratant (4) est amené à l'amplificateur d'air primaire (5) par une desdites sorties et à l'amplificateur d'air secondaire (9) par l'autre sortie.

6. Système de refroidissement de cabine (1) selon la revendication 1, **caractérisé en ce que** l'amplificateur d'air primaire (5) permet à l'air, qui est obtenu en combinant l'air intérieur de la cabine du véhicule avec l'air séché puis en refroidissant, d'être renvoyé dans la cabine.

7. Système de refroidissement de cabine (1) selon la revendication 1, **caractérisé par** l'amplificateur d'air primaire (5) dans lequel l'air aspiré de l'intérieur de la cabine est refroidi par un procédé de refroidissement par évaporation.

8. Système de refroidissement de cabine (1) selon la revendication 1, **caractérisé en ce que** l'amplificateur d'air primaire (5) est utilisé pour la circulation d'air et l'amplificateur d'air secondaire (9) est utilisé pour la régénération du liquide déshydratant (4).
